# FASCICULE DE BREVET EUROPEEN

(11) **EP 2 314 501 B1**
(45) Date de publication et mention de la délivrance du brevet: **05.09.2012**
(21) Numéro de dépôt: 10188276.9
(22) Date de dépôt: 20.10.2010
(51) Int. Cl.: B62D 53/04

(54) **Ensemble routier comprenant un véhicule tracteur, une remorque à timon coulissant et un dispositif de guidage axial**
Fahrzeugkombination mit einem Zugfahrzeug, einem Anhänger mit verschiebbarer Deichsel und einer Axialführungseinrichtung
Vehicle combination comprising a tractor, a trailer with a sliding drawbar and an axial guiding device

(30) Priorité: 21.10.2009 FR 0905057
(43) Date de publication de la demande: 27.04.2011
(73) Titulaire: LG Développement, 56150 Baud (FR)
(72) Inventeur: Le Goff, Jean Philippe, 56150 Baud (FR)
(74) Mandataire: Hays, Bertrand

(56) Documents cités:
- EP-A1- 1 598 262
- EP-A1- 2 151 373
- US-A- 4 049 289

## Description

La présente invention concerne un dispositif de guidage axial pour ensemble routier comprenant un véhicule tracteur et une remorque à timon coulissant équipée d'un dispositif à guidage axial agissant entre le véhicule tracteur et la remorque.

Il est connu, notamment dans le document brevet EP 1 598 262, un ensemble routier comprenant
- un véhicule tracteur comprenant un châssis sur lequel sont montés au moins un essieu avant et un essieu arrière,
- une semi-remorque comprenant un châssis sur lequel sont montées au moins deux roues,
- un dispositif d'attelage comprenant des moyens d'accrochage montés sur le châssis du véhicule tracteur, en avant de son essieu arrière, aptes à coopérer avec des moyens d'accrochage complémentaires de la semi remorque pour accrocher la semi remorque au véhicule tracteur dans une position dite accrochée de la semi-remorque, et
- un dispositif dit de guidage axial comprenant des moyens de guidage montés sur le châssis du véhicule tracteur, aptes à coopérer dans la position accrochée de la semi-remorque, avec des seconds moyens de guidage montés sur la semi remorque pour maintenir l'axe longitudinal médian de la semi-remorque sensiblement dans le plan longitudinal vertical du véhicule tracteur lors de la conduite sur route.

Cette nouvelle génération de semi-remorques routières à guidage axial apparue récemment sur le marché offre de nombreux avantages aux utilisateurs tels que compacité, maniabilité, tenue de route, et charge utile supérieure pour un encombrement équivalent à un véhicule classique. La principale difficulté pour la réalisation de ce type de remorque est la réalisation et l'implantation du dispositif de guidage axial qui a pour fonction le maintien de l'axe longitudinal de la semi-remorque sensiblement dans le même plan vertical que l'axe longitudinal du véhicule tracteur.

Dans les ensembles routiers proposés à ce jour, notamment dans le document brevet cité ci-dessus, le dispositif de guidage axial forme un ensemble placé entre le véhicule tracteur et sa remorque ou semi-remorque. Un dispositif, mobile autour d'un axe et sensiblement horizontal, relie le châssis du véhicule à la remorque. Il a pour principaux inconvénients d'être onéreux à fabriquer et de nécessiter d'importantes modifications du châssis du véhicule entraînant un coût global élevé. C'est pourquoi ce type de véhicules ne connaît à ce jour qu'une diffusion très limitée.

Le document brevet US 4049289 décrit un ensemble routier selon le préambule de la revendication 1.

Le but de la présente invention est de proposer un ensemble routier équipé d'un dispositif de guidage axial palliant au moins une partie de ces inconvénients, notamment qui permet, d'une part, d'utiliser un véhicule tracteur de type châssis cabine d'origine sans modification et , d'autre part, d'être simple et peu onéreux à fabriquer.

A cet effet, la présente invention a pour objet un ensemble routier tel que défini dans la revendication 1, comprenant
- un véhicule tracteur comprenant un châssis sur lequel sont montés au moins un essieu avant portant des roues avant et un essieu arrière portant des roues arrière,
- une remorque comprenant un châssis sur lequel sont montées au moins deux roues,
- un dispositif d'attelage comprenant des moyens d'accrochage montés sur le châssis du véhicule tracteur, en avant de son essieu arrière, aptes à coopérer avec des moyens d'accrochage complémentaires de la remorque pour accrocher la remorque au véhicule tracteur dans une position dite accrochée de la remorque de sorte que la remorque soit articulée sur le véhicule tracteur au moins autour d'un axe transversal de tangage sensiblement horizontal situé en avant de l'essieu arrière du véhicule tracteur, et,
- un dispositif dit de guidage axial, comprenant des premiers moyens de guidage montés sur le châssis du véhicule tracteur aptes à coopérer dans la position accrochée de la remorque avec des seconds moyens de guidage montés sur le châssis de la remorque, pour maintenir l'axe de roulis de la remorque sensiblement dans le plan longitudinal vertical médian du véhicule tracteur lors de la conduite sur route, ledit axe de roulis passant par ledit axe transversal de tangage, ce maintien étant appelé guidage axial,
- la remorque comprenant au moins un timon coulissant à freinage par inertie, associé à un dispositif de freinage par inertie, ledit timon coulissant comportant une partie fixe montée de manière fixe à l'avant du châssis et une partie mobile montée dans la partie fixe de manière coulissante longitudinalement, et munie à son extrémité libre avant desdits moyens d'accrochage complémentaires, ledit dispositif de guidage axial autorisant les mouvements longitudinaux relatifs du freinage,
- des moyens de guidage, parmi lesdits premiers ou seconds moyens de guidage, étant constitués d'au moins un bras de guidage comprenant une partie en saillie dirigée vers l'arrière lorsque le bras est monté à l'extrémité arrière du châssis du véhicule tracteur et vers l'avant lorsque la bras est monté sous la partie centrale de la remorque,
- ledit bras de guidage étant apte à pénétrer dans d'autres moyens de guidage dits complémentaires et montés sur l'autre châssis lorsque la remorque est en position accrochée au véhicule tracteur,
- lesdits autres moyens de guidage dit complémentaires montés sur l'autre châssis comprenant au moins une partie de forme complémentaire apte à se laisser pénétrer dans le sens longitudinal par la partie en saillie du bras de guidage et à collaborer avec celle-ci par appui desdites parties l'une contre l'autre dans le sens transversal horizontal lorsque la remorque est en position accrochée au véhicule tracteur, pour assurer son guidage axial,
- les seconds moyens de guidage étant aptes de se déplacer par rapport aux premiers moyens de guidage dans le sens vertical et dans le sens longitudinal entre des positions extrêmes limitées de préférence par des butées et/ou de chaque côté d'une position neutre, la remorque étant en position accrochée au véhicule tracteur.

La remorque comprend un timon d'attelage dit coulissant, à freinage par inertie, fixé à l'avant du châssis de la remorque, et positionné pour s'accrocher via ses moyens d'accrochage aux moyens d'accrochage fixés sur le châssis du véhicule tracteur, en avant de son essieu arrière. De manière connue, un tel timon coulissant à freinage par inertie est associé à un dispositif de freinage par inertie comprenant des moyens de freinage disposés au niveau des roues de la remorque et commandés par le déplacement de la partie mobile du timon coulissant via un système de transmission composé par exemple de tringles, câbles ou d'un circuit hydraulique.

Par ailleurs, selon l'invention, le dispositif de guidage axial est constitué d'au moins un bras de guidage sensiblement horizontal disposé, soit sur la remorque avec sa partie en saillie dirigée vers l'avant, soit sur le véhicule tracteur avec sa partie en saillie dirigée vers l'arrière. Lorsque la remorque est en position accrochée à son véhicule tracteur, la partie en saillie du bras de guidage est engagé dans la partie complémentaire fixée à l'autre châssis. Les parois latérales de la partie en saillie du bras de guidage et les parois latérales de la partie complémentaire viennent en appui les unes contre les autres empêchant ainsi tout mouvement latéral de la remorque par rapport à son véhicule tracteur assurant ainsi ledit guidage axial de la remorque par rapport au véhicule tracteur. Les parois latérales peuvent glisser les unes contre les autres verticalement pour permettre le libre mouvement de tangage de la remorque par rapport à son véhicule tracteur et longitudinalement pour permettre le libre coulissement du timon coulissant qui assure le freinage. L'axe de roulis de la remorque est ainsi maintenu en permanence dans le plan longitudinal vertical médian du véhicule tracteur quels que soient les mouvements relatifs de tangage, de roulis et de freinage de la remorque par rapport au véhicule tracteur, plus précisément quelles que soient les positions verticales et longitudinales relatives du châssis de la remorque et du châssis du véhicule tracteur entre leurs positions extrêmes.

Selon un mode de réalisation, au moins un bras de guidage est monté sur l'extrémité arrière du châssis du véhicule tracteur soit à l'extrémité des longerons soit à la traverse arrière, et au moins une partie de forme complémentaire est fixée rigidement sous la partie centrale du châssis de la remorque. Selon une variante de réalisation, au moins un bras de guidage est monté sous la partie centrale du châssis de la remorque et au moins une partie de forme complémentaire est fixée rigidement sur l'extrémité arrière du châssis du véhicule tracteur.

Selon un mode de réalisation, la partie en saillie du bras de guidage d'un premier ou d'un second moyen de guidage comporte au moins deux surfaces, dites surfaces d'appui, positionnées parallèlement dos à dos et comprises dans des plans verticaux longitudinaux, aptes à venir sensiblement en appui avec au moins deux autres surfaces, dites surfaces d'appui, appartenant respectivement à un second ou à un premier moyen de guidage, positionnées parallèlement en face à face et chacune sensiblement comprise dans l'un desdits plans verticaux longitudinaux, lorsque la remorque est en position dite accrochée au véhicule tracteur,

Selon une particularité, la partie en saillie du bras de guidage possède une hauteur de surfaces d'appui, mesurée dans le sens vertical, supérieure à la distance maximale les séparant mesurée dans le sens transversal horizontal. Ce rapport de longueurs allié au faible jeu existant entre deux surfaces d'appui qui collaborent ensemble, permet d'empêcher la rotation dudit bras de guidage dans la partie complémentaire solidaire de l'autre châssis sensiblement selon l'axe de roulis de la remorque lorsqu'elle est en position accrochée au véhicule tracteur. Cette disposition particulière assure le maintien du plan vertical longitudinal de la remorque sensiblement confondu avec le plan vertical longitudinal du véhicule tracteur et donc d'empêcher les mouvements de roulis de la remorque par rapport au véhicule tracteur améliorant ainsi la tenue de route de l'ensemble routier.

Selon un mode de réalisation, lesdites surfaces d'appui des premiers et / ou seconds moyens de guidage sont planes et fixes ou planes et inclinables par rapport à leur châssis afin de faciliter leur glissement vertical et longitudinal relatifs pendant le fonctionnement. Selon un autre mode de réalisation, elles sont cylindriques et fixes, ou cylindriques et rotatives autour d'un axe fixe ou inclinable par rapport à leur châssis, la rotation de rouleaux, par exemple, permettant d'annuler ou de limiter le frottement des surfaces d'appui.

Selon un mode de réalisation, un bras de guidage est constitué d'une lame épaisse, rigide et de préférence métallique, ayant des surfaces d'appui parallèles dos à dos, fixée sur l'un des châssis verticalement selon un axe longitudinal et apte à s'introduire dans l'autre moyen de guidage complémentaire, solidaire de l'autre châssis.

L'autre moyen de guidage complémentaire est constitué de deux colonnes verticales ayant des surfaces d'appui parallèles en face à face séparées d'une distance juste supérieure à l'épaisseur de la partie en saillie du bras de guidage apte à permettre son introduction puis son libre glissement entre les dites colonnes dans le sens vertical et longitudinal,

Selon un mode de réalisation, la partie en saillie du bras de guidage est constituée d'au moins deux rouleaux montés rotatifs autour d'axes horizontaux longitudinaux solidaires disposés l'un au-dessus de l'autre, les génératrices les plus éloignées dans le sens transversal constituant les surfaces d'appui de la partie en saillie du bras de guidage,

Selon un mode de réalisation, le moyen de guidage complémentaire, formant des colonnes de guidage, est constitué d'au moins deux rouleaux rotatifs, disposés verticalement et symétriquement par rapport au plan vertical longitudinal médian du châssis, dont les génératrices en vis à vis les plus proches, constituant les surfaces d'appui en vis à vis du moyen de guidage complémentaire, sont séparées d'une distance transversale juste supérieure à l'épaisseur du bras de guidage. Le faible jeu existant entre les rouleaux horizontaux et verticaux des deux moyens de guidage est le garant de la qualité du guidage axial et du silence de fonctionnement du fait de l'absence de choc.

Selon une variante, les moyens de guidage sont constitués d'au moins une paire de dispositifs de guidage montés en correspondance sur le véhicule et sur la remorque de préférence symétriquement soit par rapport au plan longitudinal vertical médian des châssis soit par rapport à un plan transversal vertical. Cette variante a pour avantage de répartir les efforts de guidage sur plusieurs dispositifs permettant de réduire leur taille et de mieux répartir les contraintes sur les châssis.

Selon un mode de réalisation, le bras de guidage et/ou les colonnes ou rouleaux verticaux de guidage sont montés sur leurs châssis respectifs par l'intermédiaire d'éléments élastiques. Ce montage souple, contrairement au montage rigide, a pour avantage de permettre l'inclinaison latérale des surfaces en appui du moyen de guidage de chaque côté d'une position neutre. Ce montage souple peut, si nécessaire, permettre en plus à l'élément de guidage concerné de se déplacer très légèrement dans le sens transversal de chaque côté d'une position neutre. Ce mode de réalisation est particulièrement indiqué dans le cas de montage de deux dispositifs de guidage en parallèle pour éviter leur éventuel coincement lors des mouvements de roulis de la remorque par rapport au véhicule tracteur.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue en perspective d'un ensemble routier en position non accrochée selon un premier mode de réalisation ;
- la figure 2 est une vue en perspective de l'ensemble routier de la figure 1 en position accrochée ;
- la figure 3 est une vue schématique en coupe partielle selon le plan vertical longitudinal de l'ensemble routier de la figure 2 ;
- la figure 4 est une vue de détail en coupe longitudinale verticale d'un dispositif de guidage selon un premier mode de réalisation ;
- la figure 5 est une vue de détail en coupe transversale du dispositif de guidage de la figure 4 ;
- la figure 6 est une vue en perspective d'un ensemble routier en position non accrochée équipé d'une paire de dispositifs de guidage selon un premier mode de réalisation ;
- la figure 7 est une vue de détail en coupe longitudinale verticale d'un dispositif de guidage selon un second mode de réalisation ;
- la figure 8 est une vue de détail en coupe transversale du dispositif de guidage de la figure 7 ;

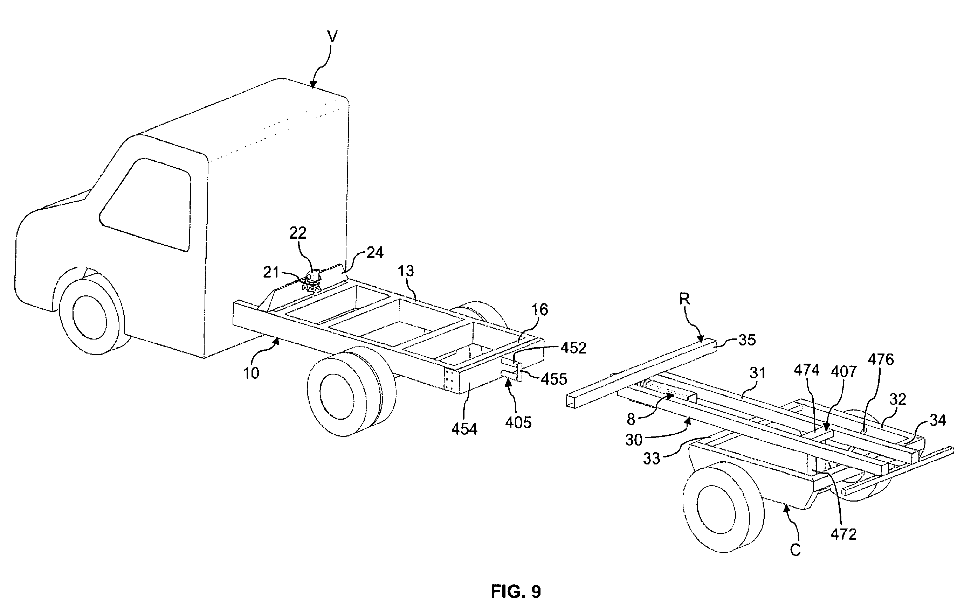

- la figure 9 est une vue en perspective d'un ensemble routier en position non accrochée selon un second mode de réalisation ;
- la figure 10 est une vue en perspective de l'ensemble routier de la figure 9 en position accrochée ;

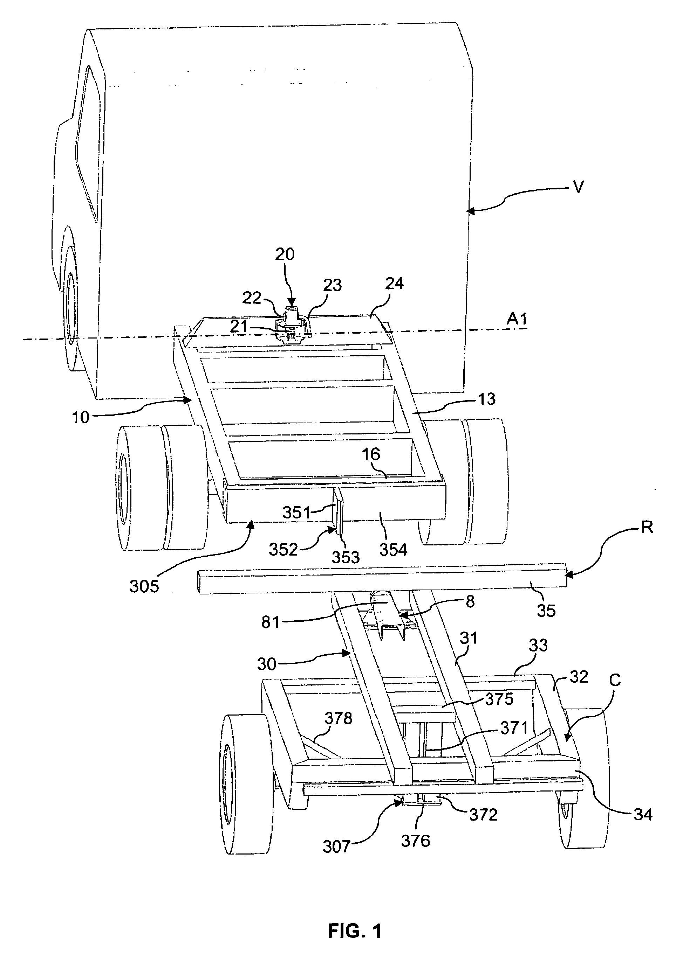

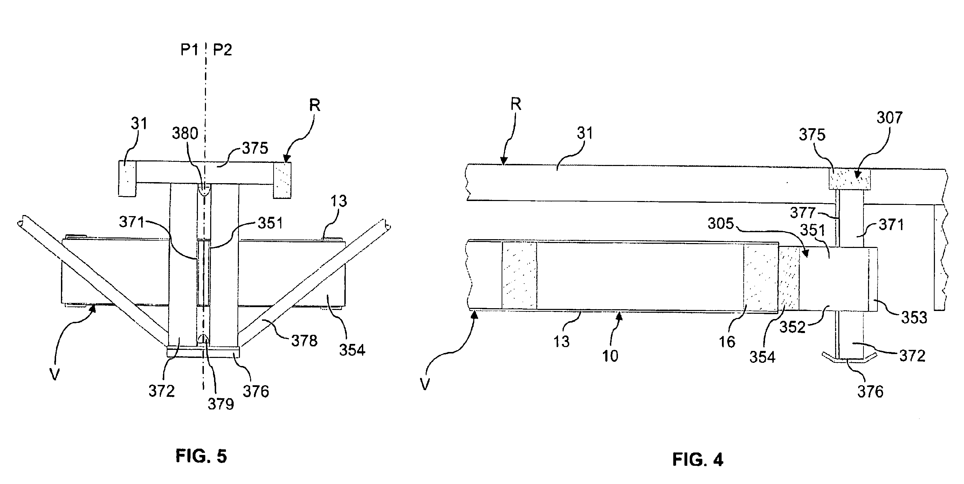

La figure 1, 2, 3, 4, 5 et 6 et illustrent un ensemble routier selon l'invention comprenant un véhicule tracteur V, de type véhicule utilitaire en version châssis cabine, et une remorque R. Le véhicule tracteur V comprend un châssis représenté schématiquement sous la référence 10, sur lequel sont montés un essieu directionnel avant portant des roues avant et un essieu arrière portant des roues arrière 11. Le châssis porte en partie avant une cabine 12 et le système de motorisation du véhicule, l'ensemble connu en soi. Le châssis 10 est formé par exemple de deux longerons 13 reliés parallèlement entre eux par plusieurs traverses dont une traverse arrière 16.

Selon un mode de réalisation, la remorque R selon l'invention comprend un châssis 30, comportant une partie dite centrale C, sur laquelle sont montées au moins deux roues 40, celle-ci étant constituée principalement de deux longerons supports latéraux 32 reliés entre eux à leur extrémité avant par une traverse 33 et à leur extrémité arrière par une traverse 34. Deux longerons parallèles 31 sont fixés rigidement aux traverses 33 et 34 et portent à leur extrémité avant une traverse 35 ainsi qu'un timon d'accrochage 8.

L'ensemble routier comprend un dispositif d'attelage connu en soi comprenant des moyens d'accrochage 20 montés sur une traverse 24 solidaire des longerons 13 du châssis 10 du véhicule tracteur V et positionnés en avant de son essieu arrière, aptes à coopérer avec des moyens d'accrochage 8 complémentaires disposés à l'avant des longerons 31 de la remorque pour accrocher celle-ci au véhicule tracteur dans une position dite accrochée de la remorque, de sorte que la remorque R soit articulée au véhicule tracteur V autour d'un point constitué par la broche 21 de la chape 22 des moyens d'accrochage 20 ou au moins autour d'un axe transversal de tangage A1 sensiblement horizontal situé en avant de l'essieu arrière et passant par le centre des points de contact de l'anneau d'accrochage 83 et de la broche 21.

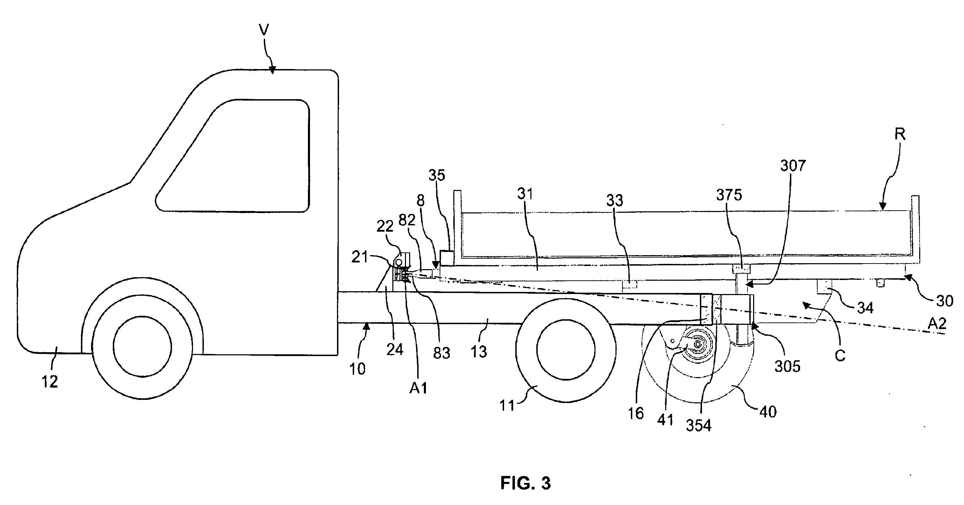

Les moyens d'accrochage 8 de la remorque sont constitués d'un timon coulissant à freinage par inertie 8 fixé symétriquement par rapport au plan longitudinal vertical sur les extrémités des longerons 31. En référence aux figures 1 et 3, le timon coulissant, connu en soi, comprend un corps tubulaire fixé aux longerons 31 à l'avant du châssis de la remorque, et une partie mobile destinée à être accrochée à un véhicule tracteur pour tracter la remorque. La partie mobile est formée d'une barre mobile 82 qui est montée coulissante longitudinalement par une première extrémité dans le passage interne du corps tubulaire fixe 81. Sa deuxième extrémité, dite extrémité libre, est équipée de moyens d'accrochage pour l'accrochage de la remorque à un véhicule tracteur, tel qu'un anneau d'accrochage 83. La barre mobile 82 est disposée sous une traverse support avant 35 fixée rigidement sur le dessus de la partie avant des longerons 31, de sorte que son anneau d'accrochage reste en avant de ladite traverse dans la position rétractée de la barre mobile. La remorque est équipée d'un dispositif de freinage par inertie commandé par l'inertie de la remorque qui provoque le rapprochement de la remorque et du véhicule tracteur lors du freinage. L'enfoncement longitudinal de la barre mobile 82 dans le corps tubulaire fixe 81 commande via un système de transmission, par exemple de type tringles, câbles ou hydraulique, l'activation de moyens de freinage disposés au niveau des roues. Pour l'attelage de la remorque, l'anneau d'accrochage 83 est maintenu prisonnier dans la chape 22 par la broche 21. L'accrochage est automatique et, pour le décrochage, l'anneau ne peut être libéré que par l'action manuelle du levier de verrouillage 23.

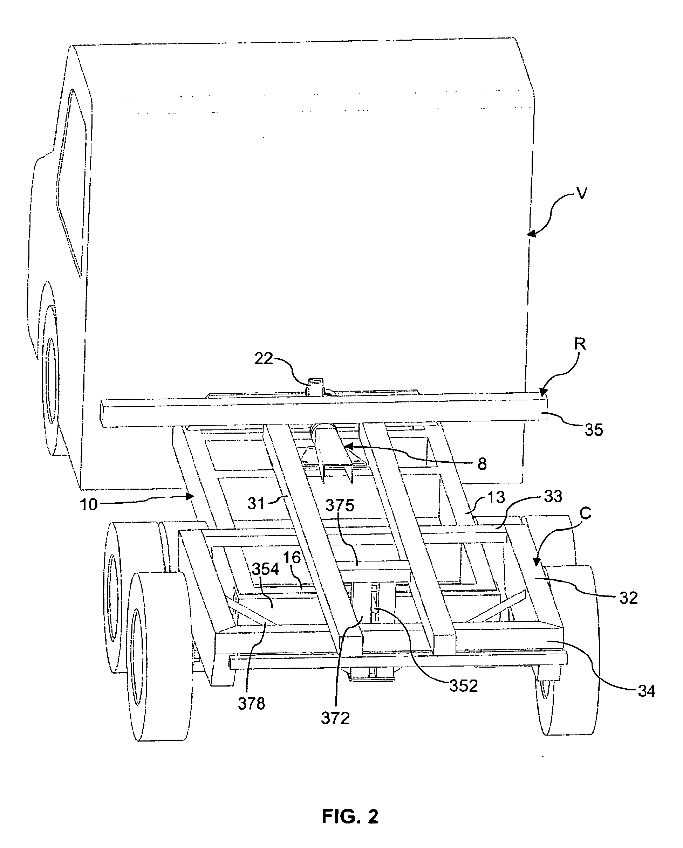

L'ensemble routier comprend en outre un dispositif de guidage axial pour maintenir l'axe de roulis A2 de la remorque R sensiblement dans le plan longitudinal vertical médian du véhicule tracteur pendant son utilisation sur route. L'axe de roulis A2 de la remorque est l'axe passant par le centre de l'anneau d'accrochage 83 d'une part et par le centre des surfaces d'appui du dispositif de guidage. Ce dispositif de guidage axial comprend des moyens de guidage 305 disposés sur le véhicule tracteur V, dits premiers moyens de guidage, aptes à coopérer avec des moyens de guidage 307 disposés sur la remorque R, dits seconds moyens de guidage, lorsque la remorque est en position accrochée au véhicule tracteur telle qu'illustrée aux figures 2 et 3.

Dans un premier mode de réalisation, en référence aux figures 3, 4 et 5, le premier moyen de guidage 305 comprend un bras de guidage fixé à l'arrière des longerons 13 du châssis 10 du véhicule V. La partie en saillie du bras de guidage est dirigée horizontalement et longitudinalement vers l'arrière et est constituée d'une lame épaisse 352 de préférence en acier dont les surfaces d'appui 351 sont verticales, opposées dos à dos, parallèles et placée symétriquement par rapport au plan longitudinal vertical médian du véhicule V. Cette lame est fixée rigidement à une traverse 354 elle-même fixée à la traverse arrière 16 et / ou à l'extrémité des longerons 13 du châssis 10. L'extrémité arrière de la lame 352 est munie d'un chanfrein 353 facilitant sa pénétration entre les colonnes 372, de l'autre moyen de guidage 307 solidaire de la remorque, lors de l'accrochage de celle-ci. L'autre moyen de guidage 307 comprend des colonnes de guidage complémentaire 372, chacune munies en leur partie avant d'un chanfrein 377 qui facilite la pénétration de la lame 352. Ces colonnes 372 possèdent des surfaces d'appui 371 planes et parallèles positionnées verticalement en face à face à une distance juste supérieure à l'épaisseur de la lame de guidage qui permet l'introduction puis le libre glissement de celle-ci entre les dites colonnes dans le sens vertical et longitudinal, les surfaces d'appui respectives 351 et 371 venant sensiblement en contact les unes avec les autres. La course de lame de guidage entre les colonnes de guidage est limitée par une butée basse 379 et une butée haute 380 constituées toutes deux, de préférence, d'un plot élastique. Les colonnes de guidage sont fixées en partie haute sur une traverse 375 solidaire des longerons 31 et reliées entre elles, en partie basse, par une plaque de liaison 376. Deux jambes de force 378 transmettent aux longerons latéraux 30 du châssis de la remorque les efforts d'appui latéraux supportés par les colonnes verticales de guidage. Les colonnes peuvent au besoin être fixées en partie haute et basse par des éléments élastiques leur permettant de s'incliner légèrement autour d'une position neutre par rapport au châssis sur lequel elles sont montées. Lors du fonctionnement sur route de l'ensemble routier avec la remorque en position accrochée, lorsqu'une des surfaces en face à face 371 de l'une des colonnes verticales de guidage 372 vient en appui latéral contre une des surfaces verticales positionnées dos à dos 351 de la lame de guidage 352, tout déplacement latéral relatif du châssis 30 par rapport au châssis 10 est empêché réalisant ainsi ledit guidage axial de la remorque par rapport au véhicule tracteur. Le libre mouvement vertical des colonnes de guidage par rapport à la lame de guidage assure la liberté du mouvement de tangage de la remorque par rapport au véhicule tracteur autour de l'axe transversal horizontal A1 et donc le libre débattement des suspensions. Le libre mouvement longitudinal des colonnes de guidage 372 par rapport à la lame de guidage 352 assure la liberté de coulissement du timon coulissant 8 nécessaire pour garantir l'action du freinage par inertie. Le libre coulissement des colonnes de guidage 372 de chaque côté de la lame 352 est assuré par un jeu latéral fonctionnel juste suffisant. La hauteur des surfaces d'appui 351, positionnées dos à dos, de la lame 352 est supérieure à la distance les séparant mesurée dans le sens transversal horizontal, qui équivaut à son épaisseur. Ce rapport de longueur garantit l'impossibilité de rotation de la lame entre les colonnes et assure ainsi l'absence de roulis de la remorque par rapport au véhicule tracteur, gage d'une meilleure tenue de route.

Dans une variante non représentée, le bras de guidage est monté sous la partie centrale du châssis de la remorque, sa partie en saillie, constituée d'une lame, dirigée vers l'avant, étant apte à pénétrer dans une partie de forme complémentaire constituée de deux colonnes de guidage fixées verticalement à l'arrière du châssis du véhicule tracteur, sur ses longerons 13 et / ou sur sa traverse arrière 16. Le bras de guidage ainsi que les colonnes de guidage peuvent être montées ridement sur leur châssis ou par l'intermédiaire d'éléments élastiques leur permettant une légère inclinaison par rapport à une position neutre.

Pour limiter les frottements, les surfaces d'appui du premier et du second élément de guidage (351, 371) peuvent être graissées afin de permettre leur bon coulissement et éviter leur usure. Ces mêmes surfaces d'appui peuvent être judicieusement constituées de matériaux présentant des bas coefficient de frottement tel que, par exemple, un acier dur agissant contre un bronze autolubrifié ou un acier chromé et poli agissant contre une surface revêtue d'une projection de céramique elle-même revêtue d'une projection de polytétrafluoroéthylène.

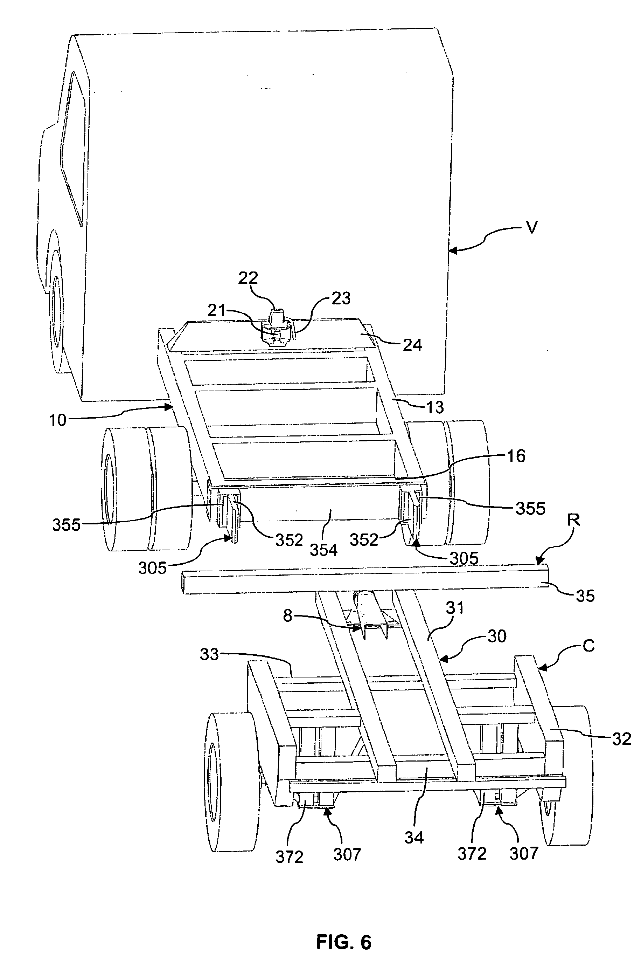

La figure 6 illustre une autre variante du premier mode de réalisation dans laquelle deux dispositifs de guidage de préférence identiques (305, 307) sont fixés de chaque côté des châssis symétriquement à leurs plans longitudinaux verticaux médians et en correspondances les uns avec les autres pour assurer le guidage axial de la remorque par rapport au véhicule tracteur. L'avantage principal de cette variante est de libérer la partie centrale arrière du châssis du véhicule tracteur. Dans ce mode de réalisation, les bras de guidage et / ou les colonnes de guidage seront utilement montés inclinables selon un axe parallèle à l'axe de roulis et / ou déplaçable latéralement par l'intermédiaires d'éléments élastiques 355. Ce montage élastique permet d'éviter tout coincement éventuel des dispositifs de guidage tout en limitant partiellement les mouvements de roulis de la remorque par rapport au véhicule tracteur.

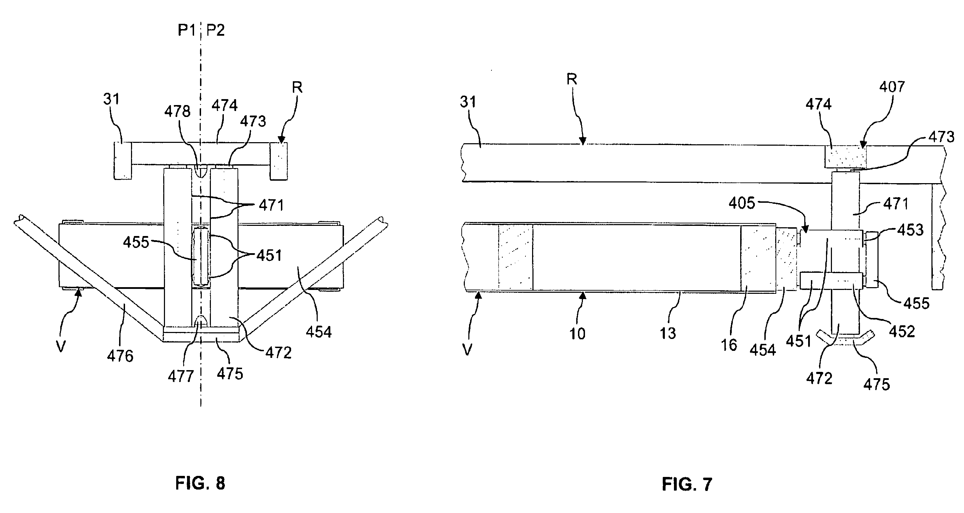

Dans un second mode de réalisation illustré aux figures 7 et 8, le premier moyen de guidage 405 comprend un bras de guidage fixé à l'arrière des longerons 13 du châssis 10 du véhicule V et dirigé vers l'arrière. La partie saillante de ce bras de guidage est constituée de deux rouleaux 452 chacun monté rotatif autour d'un axe ou dans des paliers 453 et disposés horizontalement l'un au-dessus de l'autre dans le plan longitudinal vertical médian du véhicule tracteur. Les extrémités avant des axes de rotation 453 sont fixés rigidement à une traverse 454, les extrémités arrière étant reliées entre elles par une pièce de liaison 455 chanfreinée pour faciliter la pénétration du bras de guidage dans le dispositif de guidage complémentaire solidaire du châssis de la remorque. Ce dispositif de guidage complémentaire est constitué de deux rouleaux 472 chacun monté rotatif autour d'un axe ou dans des paliers 473 et disposés verticalement de préférence symétriquement de chaque côté du plan longitudinal vertical médian de la remorque de telle manière que leurs génératrices en face à face 471 les plus proches soient séparées d'une distance juste supérieure au diamètre extérieur des rouleaux rotatifs 472 du bras de guidage. Les axes 473 sont fixés en partie haute sur une traverse horizontale 474 solidaire des longerons 31 de la remorque. Les extrémités basses des axes 473 sont solidarisées par une plaque de liaison 475 ayant pour fonction de maintenir le parallélisme des rouleaux, celle-ci étant solidaire de deux jambes de force 476, reliées en leurs extrémités hautes aux longerons latéraux 30, ayant pour fonction de transmettre au châssis de la remorque les efforts latéraux d'appui supportés par les rouleaux de guidage 472. La course des rouleaux de guidage horizontaux 452 entre les rouleaux de guidage verticaux 472 est limitée par une butée basse 477 et une butée haute 478 constituées toutes deux, de préférence, d'un plot élastique.

Lors du fonctionnement sur route de l'ensemble routier avec la remorque en position accrochée, lorsqu'une des génératrices en face à face 471 de l'un des rouleaux verticaux de guidage 472 solidaires de la remorque vient en appui latéral contre l'une des génératrices opposées 451 d'un des rouleaux de guidage horizontaux 452 solidaires du véhicule tracteur. Le jeu latéral fonctionnel existant entre les rouleaux 452 et 472 étant faible, tout déplacement latéral relatif du châssis 30 par rapport au châssis 10 est empêché réalisant ainsi ledit guidage axial de la remorque par rapport au véhicule tracteur. Le libre mouvement vertical des rouleaux de guidage 472 de chaque côté des rouleaux de guidage 452 assure la liberté du mouvement de tangage de la remorque par rapport au véhicule tracteur autour de l'axe transversal horizontal A1 et donc le libre débattement des suspensions. Le libre mouvement longitudinal des rouleaux de guidage 472 de chaque côté des rouleaux de guidage 452 assure la liberté de coulissement du timon coulissant 8 nécessaire pour garantir l'action du freinage par inertie. Comme dans le mode de réalisation précédent, le jeu minimum latéral existant entre les rouleaux de guidage 452 et les rouleaux de guidage 472 allié au rapport existant entre la distance des deux axes des rouleaux 452 et le diamètre de ceux-ci, rapport supérieur à un, garantit l'impossibilité de rotation du dispositif de guidage solidaire du véhicule dans le dispositif de guidage solidaire de la remorque empêchant ainsi le roulis de la remorque par rapport au véhicule tracteur, gage d'une meilleure tenue de route. La libre rotation des rouleaux 452 et 472 sur leurs axes ou dans leurs paliers 453 et 473 a pour avantage de supprimer les frottements des surfaces d'appui pendant le fonctionnement sur route. Les rouleaux seront de préférence constitués d'un acier dur à haute limite élastique ainsi que leurs axes et / ou paliers qui seront graissés ou montés sur roulements.

Comme pour la variante du premier mode de réalisation illustrée à la figure 6, lors du montage d'une paire de dispositifs de guidage, selon le second mode de réalisation, en correspondance sur les châssis respectifs et symétriquement par rapport à leurs plans verticaux longitudinaux médians, les paliers de rotation des rouleaux 452 et 472 pourront être montés par l'intermédiaire d'éléments élastiques, non représentés, de façon à ce qu'ils soient inclinables par rapport à leur châssis respectifs, de chaque côté d'une position neutre.

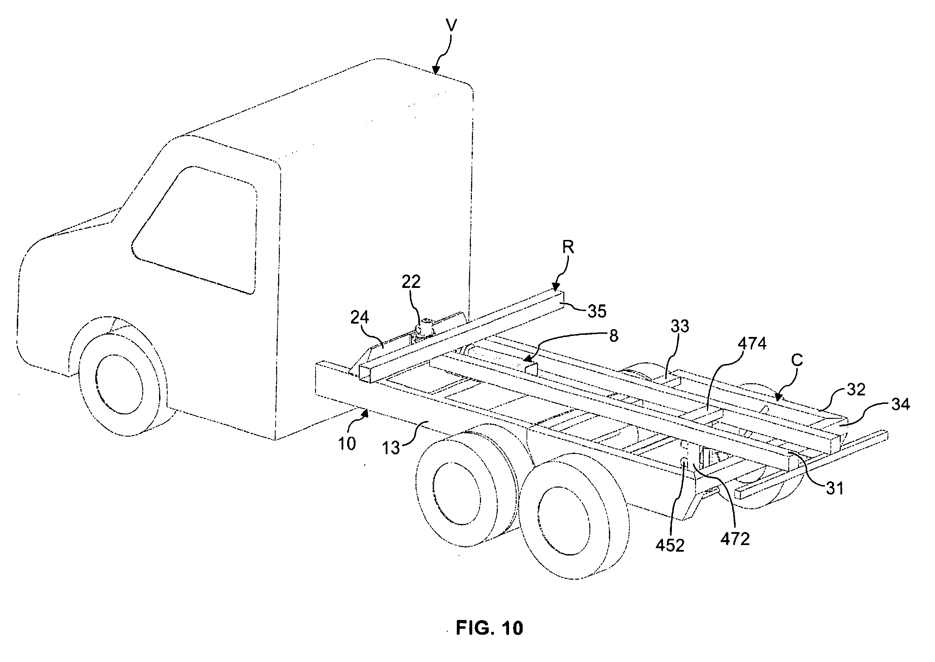

En position accrochée, tel qu'illustré aux figures 2, 3 et 10 l'avant de la partie centrale C du châssis 30 de la remorque vient au-dessus de la partie arrière du châssis 10 du véhicule tracteur dans une position dite « à cheval », sans contact avec ce dernier autre que celui existant entre les premiers 305, 405, et les seconds 307, 407 moyens de guidage. La traverse avant 33 de la partie centrale C est disposée au-dessus du châssis 10, et les longerons supports 30 viennent se positionner de part et d'autre de la partie arrière du châssis du véhicule tracteur. Chaque longeron latéral support 30, portant le dispositif de suspension 41 de la remorque, vient se positionner dans l'espace libre étroit existant entre la partie arrière du châssis du véhicule tracteur et la roue de la remorque disposée juste en arrière d'une roue arrière du véhicule tracteur et au plus près de celle-ci lorsque la barre mobile 82 du timon de freinage par inertie 8 est en position enfoncée dans le corps tubulaire fixe 81. Les flancs extérieurs des roues de la remorque sont sensiblement alignés avec les flancs extérieurs des roues arrière du véhicule tracteur qui présentent la voie la plus importante.

## Revendications

1. Ensemble routier comprenant
- un véhicule tracteur (V) comprenant un châssis (10) sur lequel sont montés au moins un essieu avant portant des roues avant et un essieu arrière portant des roues arrière,
- une remorque (R) comprenant un châssis (30), comportant une partie centrale C sur laquelle sont montées au moins deux roues,
- un dispositif d'attelage comprenant des moyens d'accrochage (20) montés sur le châssis du véhicule tracteur, en avant de son essieu arrière, aptes à coopérer avec des moyens d'accrochage (8) complémentaires de la remorque pour accrocher la remorque au véhicule tracteur dans une position dite accrochée de la remorque, de sorte que la remorque soit articulée au véhicule tracteur au moins autour d'un axe transversal de tangage (A1) sensiblement horizontal situé en avant de l'essieu arrière du véhicule tracteur, et,
- un dispositif dit de guidage axial, comprenant
- des premiers moyens de guidage, comportant au moins un bras de guidage monté sur un premier châssis parmi le châssis du véhicule tracteur et le châssis de la remorque, ledit bras de guidage comprenant une partie en saillie (352, 452) dirigée longitudinalement vers l'arrière lorsque le bras est monté à l'extrémité arrière du châssis du véhicule tracteur,
- et des seconds moyens de guidage (307, 407) montés sur le second châssis comprenant au moins une partie de forme complémentaire (372, 472) dans laquelle la partie en saillie du bras de guidage (352, 452) est apte à pénétrer lorsque la remorque (R) est en position accrochée pour maintenir l'axe de roulis (A2) de la remorque sensiblement dans le plan longitudinal vertical médian du véhicule tracteur, ce maintien latéral étant appelé guidage axial, les seconds moyens de guidage (307, 407) étant aptes à se déplacer par rapport aux premiers moyens de guidage (305, 405) dans le sens vertical, la remorque étant en position accrochée,
**caractérisé en ce que** la remorque (R) comprend au moins un timon coulissant à freinage par inertie (8), ledit timon coulissant comportant une partie fixe (81) montée de manière fixe à l'avant du châssis (30) et une partie mobile (82) montée dans la partie fixe de manière coulissante longitudinalement, et munie à son extrémité libre avant desdits moyens d'accrochage (83) complémentaires,
et **en ce que** ledit bras de guidage comprend une partie en saillie dirigée longitudinalement vers l'avant lorsque le bras est monté sous la partie centrale du châssis de la remorque, les seconds moyens de guidage (307, 407) étant aptes à se déplacer par rapport aux premiers moyens de guidage (305, 405) dans le sens longitudinal, la remorque étant en position accrochée.

2. Ensemble routier selon la revendication 1, **caractérisé en ce qu'**au moins un bras de guidage (352, 452) est monté sur l'extrémité arrière du châssis (10) du véhicule tracteur (V) et qu'au moins une partie de forme complémentaire (372, 472) est fixée rigidement sous la partie centrale (C) du châssis (30) de la remorque (R).

3. Ensemble routier selon la revendication 1 ou 2, **caractérisé en ce qu'**au moins un bras de guidage est monté sous la partie centrale (C) du châssis (30) de la remorque (R) et qu'au moins une partie de forme complémentaire est fixée rigidement sur l'extrémité arrière du châssis (10) du véhicule tracteur (V).

4. Ensemble routier selon l'une des revendications 1 à 3, **caractérisé en ce que** la partie en saillie du bras de guidage comporte au moins deux surfaces (351, 451), dites surfaces d'appui, positionnées parallèlement dos à dos et comprises dans des plans verticaux longitudinaux, aptes à venir en appui avec au moins deux autres surfaces (371, 471), dites surfaces d'appui de ladite partie de forme complémentaire (372, 472) des seconds moyens de guidage, positionnées parallèlement en face à face et chacune sensiblement comprise dans l'un desdits plans verticaux longitudinaux, lorsque la remorque est en position accrochée.

5. Ensemble routier selon l'une des revendications 1 à 4, **caractérisé en ce que** la partie en saillie du bras de guidage (352, 372) possède une hauteur de surfaces d'appui, supérieure à la distance maximale les séparant mesurée dans le sens transversal horizontal.

6. Ensemble routier selon l'une des revendications 1 à 5, **caractérisé en ce que** lesdites surfaces d'appui (351, 371) des premiers (305) et / ou seconds (307) moyens de guidage sont planes et fixes ou planes et inclinables par rapport à leur châssis.

7. Ensemble routier selon l'une des revendications 1 à 6, **caractérisé en ce que** lesdites surfaces d'appui (451, 471) des premiers (405) et / ou seconds (407) moyens de guidage sont cylindriques et fixes, ou cylindriques et rotatives autour d'un axe fixe ou inclinable par rapport à leur châssis.

8. Ensemble routier selon l'une des revendications 1 à 7, **caractérisé en ce que** ledit bras de guidage comprend une lame épaisse (352) ayant des surfaces d'appui (351) parallèles dos à dos, fixée sur l'un des châssis (10, 30) verticalement selon un axe longitudinal.

9. Ensemble routier selon l'une des revendications 1 à 8, **caractérisé en ce que** la partie de forme complémentaire des seconds moyens de guidage (307) comprend deux colonnes (372) verticales ayant des surfaces d'appui parallèles (371) en face à face séparées d'une distance juste supérieure à l'épaisseur de la partie en saillie du bras de guidage (352) apte à permettre l'introduction de celui-ci puis son libre glissement entre les dites colonnes (372) dans le sens vertical et longitudinal.

10. Ensemble routier selon l'une des revendications 1 à 9, **caractérisé en ce que** la partie en saillie du bras de guidage comprend au moins un rouleau monté rotatif (452) autour d'un axe horizontal longitudinal (453).

11. Ensemble routier selon l'une des revendications 1 à 10, **caractérisé en ce que** la partie en saillie du bras de guidage comprend au moins deux rouleaux montés rotatifs (452) autour d'axes horizontaux longitudinaux (453) solidaires disposés l'un au-dessus de l'autre.

12. Ensemble routier selon les revendications 1 à 11, **caractérisé en ce que** la partie de forme complémentaire des seconds moyens de guidage (407) comprend au moins deux rouleaux rotatifs (472), disposés verticalement et symétriquement par rapport au plan vertical longitudinal médian du châssis, dont les génératrices en vis à vis (471) les plus proches sont séparées d'une distance transversale juste supérieure à l'épaisseur du bras de guidage.

13. Ensemble routier selon l'une des revendications 1 à 12, **caractérisé en ce que** les premiers moyens de guidage (305, 405) comprennent au moins une paire de bras de guidage montés de préférence symétriquement de part et d'autre du plan longitudinal médian d'un premier châssis, apte à coopérer avec au moins une paire de parties de formes complémentaires des seconds moyens de guidage (307, 407).

14. Ensemble routier selon l'une des revendications 1 à 13, **caractérisé en ce que** le ou les bras de guidage (305, 405) et / ou la ou les paries de formes complémentaires (307, 407) sont montés sur leur châssis respectif par l'intermédiaire d'éléments élastiques (355).

15. Ensemble routier selon l'une des revendications 1 à 14, **caractérisé en ce que**, en position dite accrochée de la remorque R, sa partie centrale C portant les roues est apte à venir au-dessus de la partie arrière du châssis 10 du véhicule tracteur V à une distance telle qu'elle permet les libres mouvements relatifs verticaux et longitudinaux sans heurt des châssis 10 et 30 en utilisation normale, les supports de roues venant se placer de chaque côté de l'arrière du châssis du véhicule tracteur et les roues de la remorque se plaçant juste en arrière des roues de l'essieu arrière du véhicule tracteur.

## Claims

1. Vehicle combination comprising
- a tractor vehicle (V) comprising a chassis (10) on which there are mounted at least one front axle carrying front wheels and a rear axle carrying rear wheels,
- a trailer (R) comprising a chassis (30), having a central part (C) on which there are mounted at least two wheels,
- a hitch device comprising coupling means (20) which are mounted on the chassis of the tractor vehicle, in front of its rear axle, and are able to engage with complementary coupling means (8) on the trailer in order to couple the trailer to the tractor vehicle in what is known as a coupled position of the trailer, such that the trailer is articulated to the tractor vehicle at least about an approximately horizontal transverse pitch axis (A1) located in front of the rear axle of the tractor vehicle, and
- an axial guide device, comprising:
- first guide means, having at least one guide arm mounted on a first chassis selected from the chassis of the tractor vehicle and the chassis of the trailer, said guide arm comprising a projecting part (352, 452) which is directed longitudinally towards the rear when the arm is mounted at the rear end of the chassis of the tractor vehicle,
- and second guide means (307, 407), which are mounted on the second chassis and comprising at least one part (372, 472) of complementary shape, into which the projecting part of the guide arm (352, 452) is able to penetrate when the trailer (R) is in the coupled position in order to hold the roll axis (A2) of the trailer approximately in the vertical longitudinal mid-plane of the tractor vehicle, this lateral hold being called axial guide, the second guide means (307, 407) being able to move in the vertical direction with respect to the first guide means (305, 405), the trailer being in the coupled position,
**characterized in that** the trailer (R) comprises at least one sliding tow bar (8) having inertia braking, said sliding tow bar having a fixed part (81), which is mounted in a fixed manner at the front of the chassis (30), and a moving part (82), which is mounted in the fixed part such that it can slide longitudinally, and is provided at its free front end with said complementary coupling means (83),
and **in that** said guide arm comprises a projecting part that is directed longitudinally towards the front when the arm is mounted under the central part of the chassis of the trailer, the second guide means (307, 407) being able to move in the longitudinal direction with respect to the first guide means (305, 405), the trailer being in the coupled position.

2. Vehicle combination according to Claim 1, **characterized in that** at least one guide arm (352, 452) is mounted on the rear end of the chassis (10) of the tractor vehicle (V), and **in that** at least one part (372, 472) of complementary shape is fixed rigidly under the central part (C) of the chassis (30) of the trailer (R).

3. Vehicle combination according to Claim 1 or 2, **characterized in that** at least one guide arm is mounted under the central part (C) of the chassis (30) of the trailer (R), and **in that** at least one part of complementary shape is fixed rigidly on the rear end of the chassis (10) of the tractor vehicle (V).

4. Vehicle combination according to one of Claims 1 to 3, **characterized in that** the projecting part of the guide arm has at least two surfaces (351, 451), called abutment surfaces, which are positioned parallel and back to back, are located in longitudinal vertical planes and are able to come into abutment against at least two other surfaces (371, 471), called abutment surfaces, of said part (372, 472) of complementary shape of the second guide means, which are positioned parallel and face to face and are each located approximately in one of said longitudinal vertical planes, when the trailer is in the coupled position.

5. Vehicle combination according to one of Claims 1 to 4, **characterized in that** the projecting part of the guide arm (352, 372) has an abutment surface height which is greater than the maximum distance between said abutment surfaces, measured in the horizontal transverse direction.

6. Vehicle combination according to one of Claims 1 to 5, **characterized in that** said abutment surfaces (351, 371) of the first guide means (305) and/or second guide means (307) are planar and fixed or planar and inclinable with respect to their chassis.

7. Vehicle combination according to one of Claims 1 to 6, **characterized in that** said abutment surfaces (451, 471) of the first guide means (405) and/or second guide means (407) are cylindrical and fixed, or cylindrical and able to rotate about a fixed axis or inclinable with respect to their chassis.

8. Vehicle combination according to one of Claims 1 to 7, **characterized in that** said guide arm comprises a thick blade (352) having abutment surfaces (351) that are parallel and back to back, said blade being fixed to one of the chassis (10, 30) vertically along a longitudinal axis.

9. Vehicle combination according to one of Claims 1 to 8, **characterized in that** the part of complementary shape of the second guide means (307) comprises two vertical columns (372) having abutment surfaces (371) that are parallel and face to face and are separated by a distance slightly greater than the thickness of the projecting part of the guide arm (352) so that the latter can be introduced and can then slide freely between said columns (372) in the vertical and longitudinal direction.

10. Vehicle combination according to one of Claims 1 to 9, **characterized in that** the projecting part of the guide arm comprises at least one roller (452) mounted such that it can rotate about a longitudinal horizontal shaft (453).

11. Vehicle combination according to one of Claims 1 to 10, **characterized in that** the projecting part of the guide arm comprises at least two rollers (452) mounted such that they can rotate about integral longitudinal horizontal shafts (453) that are disposed one above the other.

12. Vehicle combination according to Claims 1 to 11, **characterized in that** the part of complementary shape of the second guide means (407) comprises at least two rotary rollers (472) which are disposed vertically and symmetrically with respect to the longitudinal vertical mid-plane of the chassis, and the closest opposite generatrices (471) of which are separated by a transverse distance slightly greater than the thickness of the guide arm.

13. Vehicle combination according to one of Claims 1 to 12, **characterized in that** the first guide means (305, 405) comprise at least one pair of guide arms, which are mounted preferably symmetrically on either side of the longitudinal mid-plane of a first chassis and are able to engage with at least one pair of parts of complementary shape of the second guide means (307, 407).

14. Vehicle combination according to one of Claims 1 to 13, **characterized in that** the guide arm or arms (305, 405) and/or the part or parts (307, 407) of complementary shape are mounted on their respective chassis by way of elastic elements (355).

15. Vehicle combination according to one of Claims 1 to 14, **characterized in that**, in the coupled position of the trailer (R), its central part (C) carrying the wheels is able to move above the rear part of the chassis (10) of the tractor vehicle (V) at a distance such that it allows free relative vertical and longitudinal movements without striking the chassis (10 and 30) in normal use, the wheel supports being positioned on each side of the rear of the chassis of the tractor vehicle and the wheels of the trailer being positioned just behind the wheels of the rear axle of the tractor vehicle.

## Patentansprüche

1. Lastzug, der enthält
- ein Zugfahrzeug (V) mit einem Fahrgestell (10), auf das mindestens eine Vorderräder tragende Vorderachse und eine Hinterräder tragende Hinterachse montiert sind,
- einen Anhänger (R) mit einem Fahrgestell (30), das einen zentralen Bereich C aufweist, auf den mindestens zwei Räder montiert sind,
- eine Kuppelvorrichtung, die auf das Fahrgestell des Zugfahrzeugs vor seiner Hinterachse montierte Ankopplungseinrichtungen (20) enthält, die mit komplementären Ankopplungseinrichtungen (8) des Anhängers zusammenwirken können, um den Anhänger in einer so genannten angekoppelten Stellung des Anhängers so an das Zugfahrzeug anzukoppeln, dass der Anhänger mindestens um eine im Wesentlichen waagrechte Nickachse (A1) an das Zugfahrzeug angelenkt ist, die sich vor der Hinterachse des Zugfahrzeugs befindet, und
- eine so genannte axiale Führungsvorrichtung, die enthält
- erste Führungseinrichtungen, die mindestens einen Führungsarm aufweisen, der auf ein erstes Fahrgestell vom Fahrgestell des Zugfahrzeugs und vom Fahrgestell des Anhängers montiert ist, wobei der Führungsarm einen vorstehenden Teil (352, 452) enthält, der in Längsrichtung nach hinten gerichtet ist, wenn der Arm am hinteren Ende des Fahrgestells des Zugfahrzeugs montiert ist,
- und auf das zweite Fahrgestell montierte zweite Führungseinrichtungen (307, 407), die mindestens einen Teil komplementärer Form (372, 472) enthalten, in den der vorstehende Teil des Führungsarms (352, 452) eindringen kann, wenn der Anhänger (R) in der angekoppelten Stellung ist, um die Wankachse (A2) des Anhängers im Wesentlichen in der mittleren senkrechten Längsebene des Zugfahrzeugs zu halten, wobei dieser seitliche Halt axiale Führung genannt wird, wobei die zweiten Führungseinrichtungen (307, 407) sich bezüglich der ersten Führungseinrichtungen (305, 405) in der senkrechten Richtung verschieben können, wobei der Anhänger in der angekoppelten Stellung ist,
**dadurch gekennzeichnet, dass** der Anhänger (R) mindestens eine gleitende Deichsel mit Trägheitsbremsung (8) enthält, wobei die gleitende Deichsel einen ortsfesten Teil (81), der ortsfest vor dem Fahrgestell (30) montiert ist, und einen beweglichen Teil (82) aufweist, der längs gleitend in den ortsfesten Teil montiert und an seinem freien vorderen Ende mit den komplementären Ankopplungseinrichtungen (83) versehen ist,
und dass der Führungsarm einen vorstehenden Teil enthält, der in Längsrichtung nach vorne gerichtet ist, wenn der Arm unter den zentralen Teil des Fahrgestells des Anhängers montiert ist, wobei die zweiten Führungseinrichtungen (307, 407) sich bezüglich der ersten Führungseinrichtungen (305, 405) in Längsrichtung verschieben können, wobei der Anhänger in der angekoppelten Stellung ist.

2. Lastzug nach Anspruch 1, **dadurch gekennzeichnet, dass** mindestens ein Führungsarm (352, 452) auf das hintere Ende des Fahrgestells (10) des Zugfahrzeugs (V) montiert ist, und dass mindestens ein Teil komplementärer Form (372, 472) starr unter dem zentralen Teil (C) des Fahrgestells (30) des Anhängers (R) befestigt ist.

3. Lastzug nach Anspruch 1 oder 2, **dadurch gekennzeichnet, dass** mindestens ein Führungsarm unter den zentralen Teil (C) des Fahrgestells (30) des Anhängers (R) montiert ist, und dass mindestens ein Teil komplementärer Form starr am hinteren Ende des Fahrgestells (10) des Zugfahrzeugs (V) befestigt ist.

4. Lastzug nach einem der Ansprüche 1 bis 3, **dadurch gekennzeichnet, dass** der vorstehende Teil des Führungsarms mindestens zwei Auflageflächen genannte Flächen (351, 451) aufweist, die parallel Rücken an Rücken positioniert und in senkrechten Längsebenen enthalten sind, die mit mindestens zwei anderen Auflageflächen genannten Flächen (371, 471) des Teils komplementärer Form (372, 472) der zweiten Führungseinrichtungen in Auflage kommen können, die parallel einander gegenüber positioniert und jede im Wesentlichen in einer der senkrechten Längsebenen enthalten sind, wenn der Anhänger in angekoppelter Stellung ist.

5. Lastzug nach einem der Ansprüche 1 bis 4, **dadurch gekennzeichnet, dass** der vorstehende Teil des Führungsarms (352, 372) eine Auflageflächenhöhe größer als die maximale sie in der waagrechten Querrichtung gemessen trennende Entfernung besitzt.

6. Lastzug nach einem der Ansprüche 1 bis 5, **dadurch gekennzeichnet, dass** die Auflageflächen (351, 371) der ersten (305) und/oder zweiten (307) Führungseinrichtungen eben und ortsfest oder eben und bezüglich ihres Fahrgestells neigbar sind.

7. Lastzug nach einem der Ansprüche 1 bis 6, **dadurch gekennzeichnet, dass** die Auflageflächen (451, 471) der ersten (405) und/oder zweiten (407) Führungseinrichtungen zylindrisch und ortsfest oder zylindrisch und um eine ortsfeste Achse drehbar oder bezüglich ihres Fahrgestells neigbar sind.

8. Lastzug nach einem der Ansprüche 1 bis 7, **dadurch gekennzeichnet, dass** der Führungsarm eine dicke Lamelle (352) enthält, die Rücken an Rücken parallele Auflageflächen (351) hat und an einem der Fahrgestelle (10, 30) senkrecht gemäß einer Längsachse befestigt ist.

9. Lastzug nach einem der Ansprüche 1 bis 8, **dadurch gekennzeichnet, dass** der Teil komplementärer Form der zweiten Führungseinrichtungen (307) zwei senkrechte Säulen (372) mit einander gegenüberliegenden parallelen Auflageflächen (371) enthält, die durch eine Entfernung knapp größer als die Dicke des vorstehenden Teils des Führungsarms (352) getrennt sind, die dessen Einführen und dann sein freies Gleiten zwischen den Säulen (372) in der senkrechten und der Längsrichtung erlauben kann.

10. Lastzug nach einem der Ansprüche 1 bis 9, **dadurch gekennzeichnet, dass** der vorstehende Teil des Führungsarms mindestens eine Walze (452) enthält, die um eine waagrechte Längsachse (453) drehbar montiert ist.

11. Lastzug nach einem der Ansprüche 1 bis 10, **dadurch gekennzeichnet, dass** der vorstehende Teil des Führungsarms mindestens zwei um waagrechte Längsachsen (453) drehbar montierte fest verbundene Walzen (452) enthält, die übereinander angeordnet sind.

12. Lastzug nach den Ansprüchen 1 bis 11, **dadurch gekennzeichnet, dass** der Teil komplementärer Form der zweiten Führungseinrichtungen (407) mindestens zwei drehbare Walzen (472) enthält, die senkrecht und symmetrisch zur mittleren senkrechten Längsebene des Fahrgestells angeordnet sind, deren nächstliegende einander gegenüberliegende Mantellinien (471) durch eine Querentfernung knapp über der Dicke des Führungsarms getrennt sind.

13. Lastzug nach einem der Ansprüche 1 bis 12, **dadurch gekennzeichnet, dass** die ersten Führungseinrichtungen (305, 405) mindestens ein Paar von Führungsarmen enthalten, die vorzugsweise symmetrisch zu beiden Seiten der mittleren Längsebene eines ersten Fahrgestells montiert sind, die mit mindestens einem Paar von Teilen komplementären Formen der zweiten Führungseinrichtungen (307, 407) zusammenwirken können.

14. Lastzug nach einem der Ansprüche 1 bis 13, **dadurch gekennzeichnet, dass** der oder die Führungsarm(e) (305, 405) und/oder der oder die Teil (e) komplementärer Formen (307, 407) mittels elastischer Elemente (355) auf ihr jeweiliges Fahrgestell montiert sind.

15. Lastzug nach einem der Ansprüche 1 bis 14, **dadurch gekennzeichnet, dass** in der so genannten angekoppelten Stellung des Anhängers R sein die Räder tragender zentraler Teil C über den hinteren Teil des Fahrgestells 10 des Zugfahrzeug V in einer solchen Entfernung kommen kann, dass er die freien senkrechten bzw. Längsbewegungen der Fahrgestelle 10 und 30 ohne Zusammenstoß bei normaler Nutzung erlaubt, wobei die Radhalter sich auf jeder Seite der Rückseite des Fahrgestells des Zugfahrzeugs und die Räder des Anhängers sich direkt hinter den Rädern der Hinterachse des Zugfahrzeugs anordnen.
